# EUROPEAN PATENT SPECIFICATION

(11) **EP 2 096 788 B1**
(45) Date of publication and mention of the grant of the patent: **04.10.2017**
(21) Application number: 08290200.8
(22) Date of filing: 28.02.2008
(51) Int. Cl.: H04L 12/00, H04L 29/06

(54) **CONFIGURATION SERVER FOR AUTOMATICALLY CONFIGURING CUSTOMER PREMISES EQUIPMENTS**
KONFIGURATIONSSERVER ZUM AUTOMATISCHEN KONFIGURIEREN VON VORORT-KUNDENGERÄTEN
SERVEUR DE CONFIGURATION POUR AUTOMATIQUEMENT CONFIGURER DES ÉQUIPMENTS CLIENTÈLES SUR SITE

(43) Date of publication of application: 02.09.2009
(73) Proprietor: ALCATEL LUCENT, 92100 Boulogne-Billancourt (FR)
(72) Inventor: Stevens, Christoph, 9190 Stekene (BE); Justen, Pascale, 1150 Brussel (BE); Coppens, Jan, 9000 Gent (BE); Acke, Willem, 2820 Rijmenam (BE)
(74) Representative: ALU Antw Patent Attorneys

(56) References cited:
- EP-A- 1 667 359
- EP-A- 1 746 767
- EP-A- 1 835 690
- US-A1- 2004 090 971

## Description

### Technical field of the invention

The present invention relates to the field of data sharing in data and telecommunication networks.

More particularly, the present invention relates to a method for sharing data, initially present on a first Customer Premises Equipment (CPE) with a second Customer Premises Equipment.

The present invention also relates to systems and devices which allow the sharing of data, present on first customer premises equipment (CPE) with a second Customer Premises Equipment.

### Background of the invention

Different ways for sharing data on a first customer premises equipment with a second customer premises equipment exist in the state of the art. This in a case of first and second CPE's being in the same home as in the case of being in different homes).

Today, this is possible via a "buddy list" of an instant messaging client running on a CPE as e.g. a personal computer (PC). An example of such an instant messaging application is the MSN messenger application which can be found on the internet for instance at 'http://webmessenger.msn.com/'.
A problem with many of those applications is that they are not being checked against viruses and other malicious software. Another problem is that missing dependencies are not being checked. Moreover, problems may arise with respect to the configuration of the equipment. These and other problems result in an installation and configuration burden.

Founded in March 1999, the OSGi™ Alliance (Open Service Gateway initiative) specifies, creates, advances and promotes wide industry adoption of an open service delivery and management platform. The OSGi™ Alliance serves as the focal point for a collaborative ecosystem of service providers, developers, manufacturers and customers. The OSGi™ technology is designed to ease the development of new services and applications for the latest generation of networked devices. Adding an OSGi™ service platform to a device, enables managing the life cycle of the software components in the device from anywhere in the network. Software components can be installed, updated or removed on the fly without having to disrupt the operation of the device. The OSGi™ service platform is a Java based service platform running on top of a Java Virtual Machine (JVM) residing in the device.

The DSL Forum is an international industry consortium of service providers, equipment and component manufacturers and other interested parties, focussing on developing broadband DSL. The DSL Forum develops technical specifications and indirectly standards that enable delivery of DSL products and services. More information about the DSL Forum is available from its internet site http://www.dslforum.org.

One of those technical specifications is the DSL forum's Technical report TR-069 (e.g. issue 1, amendment 2, dating from December 2007 [also referred to as version v1.1 for the purpose of this description]), specifying the CPE WAN Management Protocol (also referred to as CWMP or TR-069). The TR-069 Management Protocol and corresponding network architectures allow communication between a Customer Premises Equipment (CPE) and an automatic configuration server (ACS). It defines a mechanism that encompasses secure auto-configuration of a CPE, and also incorporates other CPE management functions into a common framework.
EP1667359 describes a remote management method, a related auto configuration server, a related routing gateway and a related device.

### Summary of the invention

It is an object of the present invention to provide a method for data sharing, which takes into account the specificities, for instance the configuration information, of 2 different customer premises equipments, in order to allow a secure and correctly configured transfer of data as for instance applications and/or dynamic and/or static data to be shared from a first customer premises equipment with the second customer premises equipment.

For the purpose of the present description, "data" comprises applications as well as data (static and dynamic).
Examples of such data can be for instance but not only private or home made applications, personal content index, attention data (which is the data left behind online (e.g. online profiles, photos, videos.))

When terms as "first", "second", "third" and the like are used, this does not necessarily mean that a sequential or that a chronological order is to be assumed.

The term "comprising", should be interpreted as such that it does not exclude other elements or steps.

In certain embodiments of the present invention a remote management protocol (RMP) is used, which can advantageously be a CPE WAN management protocol (CWMP) defined by the DSL forum's Technical Report TR-069 (e.g. version V1.1 dating from December 2007, but also including earlier or future versions comprising he relevant functionalities, as would be recognised by the person of ordinary skill) for secure auto-configuration as well as other CPE management functions as for instance but not only dependency checking. In other words the TR-069 is a protocol for communication between a Customer Premises Equipment (CPE) and an auto configuration server (further also referred to as ACS).

The DSL forum's Technical Report TR-069 (e.g. version V1.1 dating from December 2007) is hereby integrated by reference.

In other embodiments for instance TR-069 - extensions (TR-098, TR-104, TR-106, TR-110, TR-111, TR-135, TR-140) can be used, or SNMP, NETCONF, or any appropriate remote management protocol (RMP)can be used, as will be recognised by the skilled person.

For the purpose of the present invention, the following terminology has been used, corresponding, unless mentioned otherwise, with the terminology of the TR-069 specification. The term "Device" is used in its ordinary sense and not as in TR-069. The CPE is TR-069 can thus be seen as an example of a device for the purpose of the present description.
- ACS: Auto-Configuration Server: this is a component in the broadband network responsible for auto-configuration of the CPE for advanced services. The ACS can also be used for lifecycle management of the services deployed on the CPE. (It is to be noted that a collection of ACSs behind a load balancer is considered a single ACS for the purposes of this description.)
- CPE Customer Premises Equipment; an example of a device present at the customer premises. It preferably refers to any TR-069-compliant (or CWMP compliant) device and therefore covers both Internet Gateway Devices and LAN-side end devices.
- CWMP: CPE WAN Management Protocol (the subject of the standard TR-069)."
- STB Set Top Box. This device contains Audio and Video decoders and is can be connected to Analog TV and / or Home Theaters.

It is though to be noted that the terminology may be applicable in a broader context than the specific TR-069 context. The embodiments according to the present invention are moreover independent of the physical medium used.

At the user or customers premises, today a lot of media content is currently viewed via a "Set Top Box". It is believed that the functionality of the Set Top Box (being an example of a customer premises equipment) will evolve towards the functionality of the media centre in a home network in the future.

In state of the art network and service architectures, the Set Top Boxes are each managed via an Automatic configuration server (ACS), but they are independent entities.

According to a first aspect of the present invention, a method for sharing of data present on a first customer premises equipment with a second customer premises equipment by means of at least a signaling and a data flow is disclosed, characterized in that an automatic configuration server (ACS), adapted for automatically configuring customer premises equipments (CPEs), is within (or is part of) the signalling flow.

According to embodiments of the present invention the automatic configuration server is further within (or part of) the data flow.

The automatic configuration server is typically under control of the service provider. According to embodiments of the present invention, sharing data is not limited to the CPE platform (e.g. PC platform) only, since the ACS and thus the service provider is in the loop and has control.

These methods and corresponding network architectures provide a basis for social networking applications based on CPE's (e.g. Set Top Boxes), and can form a basis for other business models for the service provider.

Both service providers as well as end users can benefit from the methods according to embodiments of the present invention. They provide the possibility for users in the home to share their data (e.g. applications, Bundles, static and dynamic data) in a controlled and secure way without installation and configuration burden.

Further aspects of the present invention are described by the dependent claims. The features from the dependent claims, features of any of the independent claims and any features of other dependent claims may be combined as considered appropriate by the person of ordinary skill, and not only in the particular combinations as defined by the claims.

According to preferred embodiments of the present invention the ACS performs dependency checking for data (for instance applications and/or static and/or dynamic data) on said first customer premises equipment.

According to preferred embodiments of the present invention, the automatic configuration server passes the results of the dependency checking process to the second customer premises equipment. The second customer premises equipment may then download the missing dependencies.

In advantageous embodiments according to the present invention, the ACS retrieves the data and the missing dependencies and stores them on a data storage means at a location which is accessible when the first CPE is off-line.

In embodiments according to the present invention the automatic configuration server performs or further performs security checking and/or scenario orchestration or management. Examples of security checking are for instance authentication, signature checking of the applications/static data.

In embodiments according to the present invention the first and the second customer premises equipment and the automatic configuration server are communicating by means of at least a remote management protocol. This can preferably be a CPE WAN management protocol (CWMP) defined by the DSL forum's Technical report TR-069.

According to a second aspect of the present invention, corresponding systems which enable the use of methods according to the first aspect of the present invention are also described.

According to embodiments of the present invention, a system for sharing of data comprising a first CPE and a second CPE which are adapted for communicating with each other by means of at least a signalling flow and a data flow, and a ACS, wherein the automatic configuration server is arranged such that it is within (or part of) said signalling flow between said first CPE and said second CPE when said system is operational.

According to embodiments of the present invention the ACS is further within (or part of) said data flow.

According to preferred embodiments of the present invention, the ACS is arranged and adapted for dependency checking for application on said first CPE.

According to preferred embodiments of the present invention, the ACS is arranged and adapted for forwarding the results of said dependency checking process to said second CPE.

According to preferred embodiments of the present invention, the ACS is arranged and adapted for retrieving and storing said missing dependencies.

According to preferred embodiments of the present invention, the ACS is arranged and adapted for security checking.

According to preferred embodiments of the present invention the system further comprises a means for data storage in communication with the ACS, on which the applications and the missing dependencies originating from the first customer premises equipment can be stored and retrieved.

According to preferred embodiments of the present invention the first and the second customer premises equipment and the automatic configuration server are compatible with technical specification TR-069.

According to preferred embodiments of the present invention, the first customer premises equipment and the second customer premises equipment comprise an OSGi™ platform.

According to a third aspect of the present invention, an automatic configuration server is disclosed adapted for automatically configuring a customer premises equipment, further adapted for being within (or part of) a signalling flow between a first CPE and a second CPE.

According to embodiments of the present invention, the automatic configuration server is further adapted for being within (or part of) a data flow between a first CPE and a second CPE.

According to preferred embodiments, the automatic configuration server is further adapted to perform dependency checking for applications present on a CPE.

According to preferred embodiments, the automatic configuration server is adapted for forwarding the results of said dependency checking to a second CPE.

According to preferred embodiments, the ACS is further adapted for communicating with a data storage means on which data (for instance applications or static data or Bundles) can be stored and retrieved.

It should be understood that the methods and corresponding systems and devices according to embodiments of the present invention are not limited to interactions between only two customer premises equipments. Data and/or applications may be shared with any number of CPE's based on the same mechanisms.

According to certain embodiments the different customer premises equipments belong to two different home networks. They may be located physically in two different homes or can be located physically within the same home.

According to certain embodiments the different customer premises equipments belong to two different users in a single home network.

The first CPE and the second CPE can be different CPE's, similar CPE's or can be the same.

The data to be shared can be for instance data files or applications.

Examples of customer premises equipments are Set Top Boxes, internet/service gateway devices and LAN-side end devices, wireless sensor gateways, modems, telephones.

According to embodiments of the present invention a platform is provided on OSGi™-enabled devices (in a bundle or the framework) in which applications and/or data can be shared between users of different customer premises equipments.

In preferred embodiments this platform can be managed by the Service provider through the use of TR-069.

According to certain embodiments of the present invention, applications (e.g. home made applications) can be made available by means of state of the art communication mechanisms, as for instance by sending a download link via email or instant messaging, on to which an interested buddy (i.e. a user of a second CPE) could click and which more specifically results in automatic installation, configuration and execution on the service platform.

According to certain embodiments of the present invention an application (OSGi™ bundle) can be added in which profiles for the different members of the home can be added. This allows different users of the CPE to be viewable at the same time and features and status (health status) regarding their profile can be shared between homes via the ACS. Users in another home network can search for members (also called users) of a home network and add them to their buddy list.

According to embodiment of the present invention, identification can be based on an openid URL (see for instance http://openid.net/; enabling the identification of a user/client on the internet by providing a single digital identity).

An "openid" account can also be protected with an electronic identity (EID) identification, in which the service provider or network provider could also function as an openid provider. This can prevent casual guests or other home members fiddling with accounts and/or downloads of other parties (e.g. downloading data in a third party's name.)

According to embodiments of the present invention, by means of a GUI (graphical user interface), metadata can be added to one's shared applications, as for instance but not only the serial number of the Set Top Box (or CPE). This allows signature of one's own applications, and make applications only viewable and/or sharable to certain members of one's buddy list.

In case the service provider, typically in control of the ACS, wants to limit the process described in the previous paragraph, the applications or bundles being shared (for instance home made applications, backgrounds, sounds), can be limited to a restricted set of the available API's (application programming interface).

According to embodiments of the present invention, the (user-created) applications on said first CPE can run in a sandbox-type model with limited memory. In the field of computer security, a sandbox is a security mechanism for safely running programs. The sandbox typically provides a tightly-controlled set of resources for guest programs to run in, such as scratch space on disk and memory. Network access, the ability to inspect the host system or read from input devices is usually disallowed or heavily restricted. In this sense, sandboxes are a specific example of virtualization. This prevents tampering with the availability of the premium services and/or the Set Top Box (STB) (or CPE). Premium services are services that users can subscribe for with their Internet Service Provider (ISP) by paying for instance a monthly fee. Some typical premium service agreements may include a service level agreement (SLA). Examples are IPTV (video on demand) and Voice over IP (VOIP).

According to certain embodiments of the present invention, a consumer/user could buy electronic goods with a related service in a shop. The goods can come with software, which is certified by the Service provider. Once activated the goods connect to the Set Top Box (or CPE) controlled by the ACS and the application installs and configures itself automatically after it is optionally downloaded from the ACS. The software/service concept can then be based on the fact that this application is being shared with people within other homes; all connected to the same Service provider which enables new business models.

Embodiments of the present invention help positioning the Set Top Box or CPE's controlled by the ACS more as a media centre in the home, which is in line with current tendencies in the industry. They enable new business models for the Service provider. They provide the possibility for users in the home to customize their environment in a controlled and secure way without the installation and configuration burden.

It is to be noted that according to embodiments of the present invention, applications and/or data can be shared for instance but not only with "buddies" (a private network of friends) or with (sets of) members of the public, or everyone. The embodiments of the present invention provide Internet Service Providers with new service possibilities.

According to certain embodiments in which an additional means for data storage is in communication with said ACS (e.g. an OBR (OSGi Bundle Repository) of proxy server), applications can be downloaded from said data storage means even when the Set Top Box (STB) or CPE from the up-loader (i.e., developer) is off-line.

### Brief description of the drawings

The accompanying drawings are used to illustrate embodiments of the present invention.
Fig. 1 illustrates a prior art solution.
Fig.2 illustrates a first embodiment of the present invention.
Fig. 3 illustrates a second embodiment of the present invention.
Fig. 4 illustrates a (simplified) call flow according to a first embodiment of the present invention.
Fig. 5 illustrates a (simplified) call flow according to a second embodiment of the present invention.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

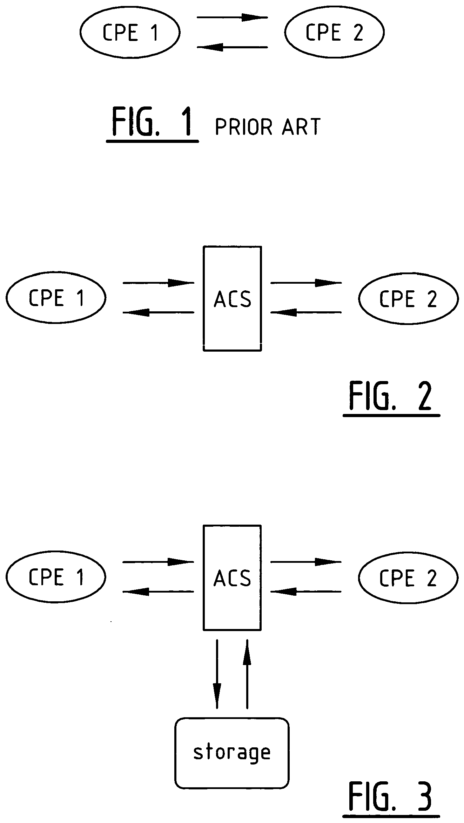

In Fig.1 the prior art scenario is depicted. A first CPE (CPE1) and a second CPE (CPE2) see each other via a "buddy list" of instant messaging clients.

After a signaling flow to for instance notify CPE2 of the presence of an application or OSGi Bundle C on CPE1, between CPE1 and CPE2, a data flow (data transfer) takes place, wherein the data is not being checked against viruses and other malicious software, and wherein missing dependencies are not checked.

An OSGi bundle comprises Java classes and other resources which together can provide functions to device owners/users and provide services and packages to other bundles. A bundle can be distributed as a JAR file.

An OSGi bundle typically contains the following resources and information:
- Resources to implement zero or more services. These resources can be class files for the Java programming language and other data, such as but not only HTML files, help files, and icons.
- A manifestfile describing the contents of the JAR file and providing information about the bundle. The manifest file uses headers to specify parameters that are needed to install and activate a bundle.
- The dependencies on other resources, such as Java packages, that must be available to the bundle before the bundle can run. The dependencies for these packages are resolved prior to starting a bundle.
- A special class in the bundle to act as the bundle activator. The class is instantiated and invoked to start and stop methods, which are used to start or stop the bundle. Clean-up operations can be performed when the bundle is stopped.
- Optional documentation of the JAR file or one of its sub-directories. The documentation must not be required to run the bundle. Once a bundle is started, the functions and services are exposed to other bundles.

Applications can consist of one or more bundles. An unresolved dependency occurs when a part (java package or other resource) of the application is missing, such that the application cannot start and run.

Problems may arise with respect to the configuration of the equipment. These and other problems result in an installation and configuration burden.

Fig. 2 illustrates embodiments according to the present invention in which an automatic configuration server, adapted and arranged for performing dependency checking and preferable also adapted and arranged for performing security checking, is part of the signaling flow and optionally, according to certain embodiments, also part of the data flow between a first CPE (CPE1) and a second CPE (CPE2).

In Fig. 3 a further embodiment according to the present invention in shown in which the Automatic configuration server, adapted and arranged for performing dependency checking and preferably also adapted and arranged for performing security checking, further comprises or is in communication with a means for data storage. This allows the storage of information as for instance the application originally residing on CPE1 to be transferred, including the dependency checking information, and/or according to certain preferred embodiments the missing dependencies themselves, such that CPE2 can access the information when CPE1 is offline.

The data storage means may be physically residing in the ACS or may be external to the ACS.

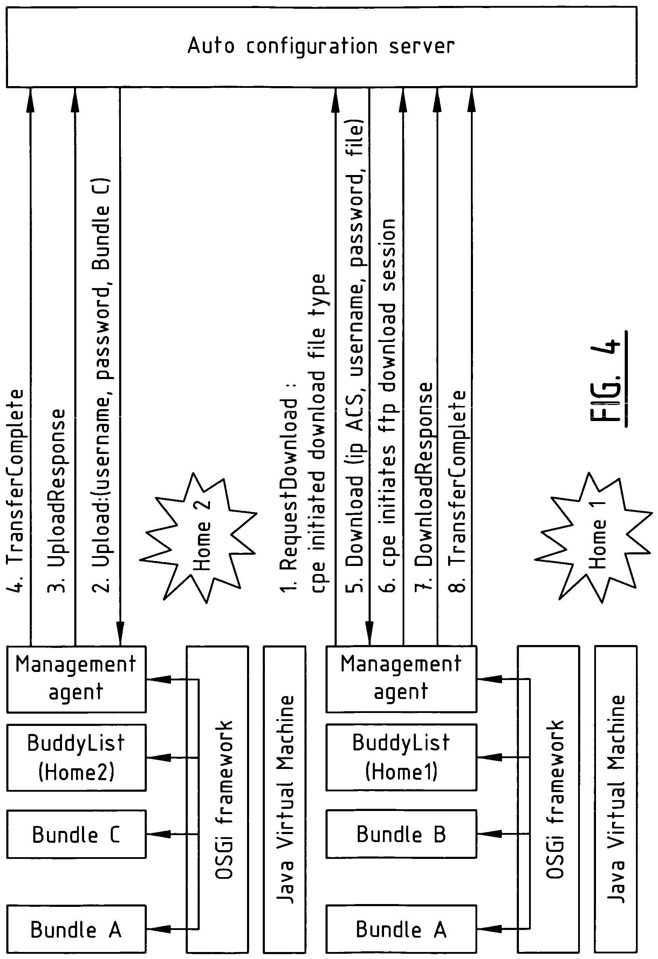

The embodiment according to Fig. 2, wherein applications are shared via TR-069 is described in Fig. 4. A member of Home2 has published a self made application or Bundle C which is displayed via the buddy list application of Home1. It is assumed that a member/user of Home1 wants to fetch the application or Bundle C.

In order to make this possible, the Set Top Box (or CPE) of Home1 will launch a requestDownload action referring to the application (Bundle C) to an Automatic Configuration Server. A request download action typically contains one or more arguments (sometimes also called parameters, or references), such as a reference to what (e.g. application, data, profile) a user wants to download and meta data, such as for example serial number of the CPE which can be used as unique identification (deviceId) within the ACS and/or other parameters as "profileid", "certificate".
It is noted that another specific FileType than the currently available FileTypes (Firmware Upgrade, Web Content, Vendor Configuration File) could be chosen, for example the FileType "Userbundle" which may be standardized in the future.

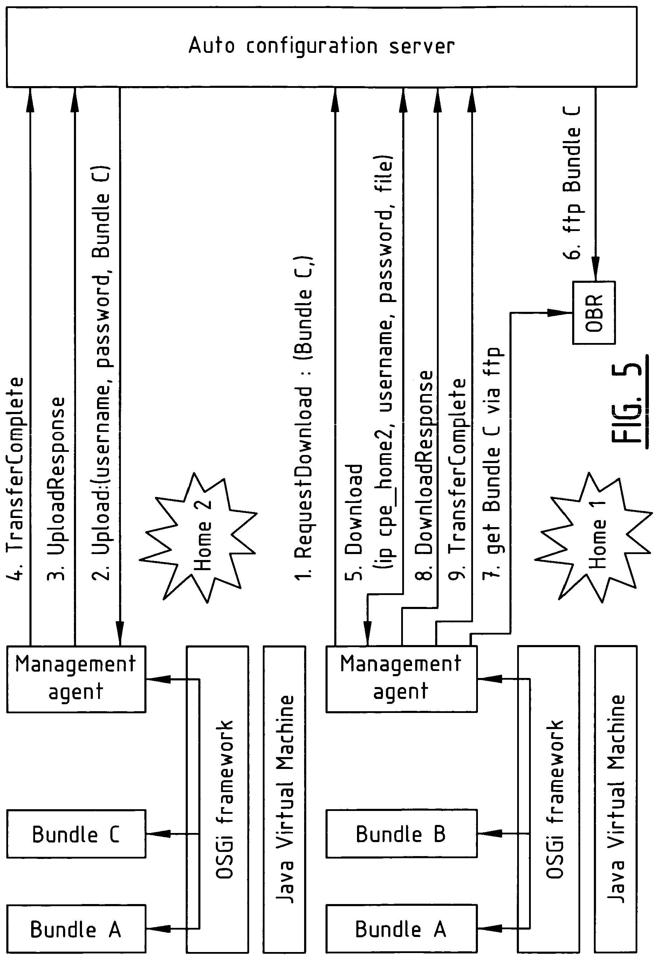

As FileType arguments for such a "Userbundle" a reference to the user and thus an implicit reference to Set Top Box or CPE of home2 can be given. Here again the reference can be the deviceId, which can be a unique number assigned by the ACS to the CPE during the activation scenario , or the CPE serial number .The ACS then finds out where the application is residing based on the references and meta data given in the request Download action, and launches an upload action to the CPE of home 2. The Set Top Box or CPE of home2 can then respond with a successfully uploadResponse notification (the term "message" can be used as an alternative for "notification"), and a transferComplete notification when the transfer of the data is complete. The ACS can then initiate a download request to the Set Top Box or CPE of home1, which on its turn will fetch bundle C via for instance an FTP session from the ACS. This can then be followed by successful downloadResponse notification and transferComplete notification. Another embodiment according to Fig. 3, wherein applications are shared via TR-069 is described in Fig. 5. The flow is basically the same as for the embodiment depicted in Fig.4, but the ACS first transfers the application to a data storage means as for instance an OBR (OSGi Bundle Repository (OBR)) after the upload from Set Top Box or CPE of home2; this way it is easier to check the application on viruses and malicious code. To boost performance, the ACS can check whether the application is already available to see if an upload is really necessary.

According to further embodiments of the present invention, the ACS is only part of the signaling flow [in another formulation: only takes part in the signaling path (it is for instance performing dependency checks, conformity checking and not in the data path. This can be the case for instance when all dependencies are resolved and there are thus no missing dependencies.

Conformity checks are typically platform dependent: e.g. missing bundles , enough memory , stated CPU load of the destination platform. The service provider may provide a sort of online or offline environment where a user can test the conformity of his application.

Signing of data can be a combination of code signing and use of certificates. It comprises the process of digitally signing executables and scripts to confirm the software author and guarantee that the code has not been altered or corrupted since it was signed by for instance usnig of a checksum and/or a digital signature mechanism to verify the identity of the author or build system. Code signing can also be used to provide versioning information about an object or to store other meta data about an object. The application can also be foreseen from a digital watermark (which can be part of the conformity process) to cover liability issues.

According to further embodiments the ACS can be in the control flow path to resolve the missing dependencies, which are then pushed via the ACS. In case of OSGi it would mean that the missing dependencies (libs, applications) are detected by examining the manifest of the ".jar" file of the OSGi bundle where is stated which code parts it needs to start/run. The ACS can examine this manifest and request a list of the installed bundles on the target platform. In case of missing parts, it can resolve them on the destination, before notifying the destination where to get the requested application/data. The data can be transferred by any protocol suitable for it, as will be recognized by the skilled person.
The additional functions of conformity checking and signing of data can reside in the ACS and can be executed by it, or they can reside and at the CPE level. In other words, certain functions of the ACS can be offloaded to the Set Top Box or CPE in the home. In this case checking the conformity which may include dependency checking and signing of the application/data can be done on a CPE/Set Top Box in the home by a additional application which is installed on the CPE/Set Top Box. The latter can also be done by the ACS, whereby the data/application to be shared is transferred after signing to the ACS and the ACS performs the conformity checking which may include dependency checking.

While the principles of the invention have been set out above in connection with specific embodiments, it is to be clearly understood that this description is merely made by way of example and not as a limitation of the scope of protection which is determined by the appended claims.

## Claims

1. Method for sharing of data present on a first customer premises equipment, CPE, (CPE 1) with a second customer premises equipment (CPE 2) by means of at least a signalling and a data flow, **characterized in that** an automatic configuration server, ACS, (ACS), adapted for automatically configuring customer premises equipments, CPEs, is within said signalling flow.

2. A method according to claim 1, wherein said automatic configuration server (ACS) is further within said data flow.

3. A method according to claim 1, wherein said ACS performs dependency checking for data on said first customer premises equipment (CPE 1).

4. Method according to claim 3, wherein said automatic configuration server (ACS) passes the results of said dependency checking process to said second customer premises equipment (CPE 2).

5. Method according to claim 3, wherein said ACS retrieves said data and said missing dependencies and stores them on a data storage means at a location which is accessible when said first CPE is off-line.

6. Method according to claim 1, wherein said automatic configuration server (ACS) performs security checking.

7. An automatic configuration server, ACS, (ACS) for automatically configuring a customer premises equipment, CPE, adapted for being within a signalling flow between a first CPE (CPE 1) and a second CPE (CPE 2)

8. An automatic configuration server (ACS) according to claim 7, further adapted for being within said data flow.

9. An automatic configuration server (ACS) according to claim 8 further adapted to perform dependency checking for applications present on one of said CPEs.

10. An automatic configuration server (ACS) according to claim 9, adapted for forwarding the results of said dependency checking to the second CPE.

11. An automatic configuration server (ACS) according to claim 9, further adapted for communicating with a data storage means on which data is to be stored and retrieved.

12. A system for sharing of data comprising the first customer premises equipment, CPE, (CPE 1) and the second CPE (CPE 2) which are adapted for communicating with each other by means of at least a signalling flow and a data flow, and the automatic configuration server, ACS, (ACS) according to claim 7.

13. A system according to claim 12, wherein said ACS is further within said data flow.

14. A system according to claim 12, wherein said ACS is arranged and adapted for dependency checking for application on said first CPE.

15. A system according to claim 14, wherein said ACS is arranged and adapted for forwarding the results of said dependency checking process to said second CPE.

16. A system according to claim 12, wherein said ACS is arranged and adapted for retrieving and storing said missing dependencies.

17. A system according to claim 12, wherein said ACS is arranged and adapted for security checking.

18. A system according to claim 12, further comprising a means for data storage in communication with said ACS, on which said applications and said missing dependencies originating from said first customer premises equipment (CPE 1) are to be stored and retrieved.

19. A system according to claim 12 wherein said first and said second customer premises equipment and said automatic configuration server (ACS) are compatible with technical specification TR-069.

20. A system according to claim 12, wherein said first customer premises equipment (CPE 1) and said second customer premises equipment (CPE 2) comprise an OSGi platform.

## Patentansprüche

1. Verfahren zum Teilen von Daten, die auf einem ersten Kundenendgerät, CPE, (CPE 1) vorhanden sind, mit einem zweiten Kundenendgerät (CPE 2), mittels mindestens eines Signalisierungs- und eines Datenstroms, **dadurch gekennzeichnet, dass** sich ein automatischer Konfigurationsserver, ACS, (ACS), der zum automatischen Konfigurieren der Kundenendgeräte, CPEs, angepasst ist, innerhalb des besagten Signalisierungsstroms befindet.

2. Verfahren nach Anspruch 1, wobei sich der besagte automatische Konfigurationsserver (ACS) ferner innerhalb des besagten Datenstroms befindet.

3. Verfahren nach Anspruch 1, wobei der besagte ACS eine Abhängigkeitsüberprüfung für Daten auf dem besagten ersten Kundenendgerät (CPE 1) durchführt.

4. Verfahren nach Anspruch 3, wobei der besagte automatische Konfigurationsserver (ACS) die Ergebnisse des besagten Abhängigkeitsüberprüfungsprozesses an das besagte zweite Kundenendgerät (CPE 2) übermittelt.

5. Verfahren nach Anspruch 3, wobei der besagte ACS die besagten Daten und die besagten fehlenden Abhängigkeiten abruft und diese auf einem Datenspeichermittel an einem Ort speichert, der zugänglich ist, wenn das besagte erste CPE offline ist.

6. Verfahren nach Anspruch 1, wobei der besagte automatische Konfigurationsserver (ACS) eine Sicherheitsüberprüfung durchführt.

7. Automatischer Konfigurationsserver, ACS, (ACS) zum automatischen Konfigurieren eines Kundenendgeräts, CPE, der angepasst ist, um sich innerhalb eines Signalisierungsstroms zwischen einem ersten CPE (CPE 1) und einem zweiten CPE (CPE 2) zu befinden.

8. Automatischer Konfigurationsserver (ACS) nach Anspruch 7, der weiterhin angepasst ist, um sich innerhalb des besagten Datenstroms zu befinden.

9. Automatischer Konfigurationsserver (ACS) nach Anspruch 8, der weiterhin angepasst ist, um eine Abhängigkeitsüberprüfung für Anwendungen durchzuführen, die auf einem der besagten CPEs vorhanden sind.

10. Automatischer Konfigurationsserver (ACS) nach Anspruch 9, der weiterhin angepasst ist, um die Ergebnisse der besagten Abhängigkeitsüberprüfung an das zweite CPE weiterzuleiten.

11. Automatischer Konfigurationsserver (ACS) nach Anspruch 9, der weiterhin angepasst ist, um mit einem Datenspeichermittel zu kommunizieren, auf dem Daten zu speichern und abzufragen sind.

12. System zum Teilen von Daten, umfassend das erste Kundenendgerät, CPE, (CPE 1) und das zweite CPE (CPE 2), die angepasst sind, um mittels mindestens eines Signalisierungs- und eines Datenstroms miteinander zu kommunizieren, und den automatischen Konfigurationsserver, ACS, (ACS) nach Anspruch 7.

13. System nach Anspruch 12, wobei sich der besagte ACS weiterhin innerhalb des besagten Datenstroms befindet.

14. System nach Anspruch 12, wobei der besagte ACS zur Abhängigkeitsüberprüfung für eine Anwendung auf dem besagten ersten CPE angeordnet und angepasst ist.

15. System nach Anspruch 14, wobei der besagte ACS angeordnet und angepasst ist, um die Ergebnisse des besagten Abhängigkeitsüberprüfungsprozesses an das besagte zweite CPE weiterzuleiten.

16. System nach Anspruch 12, wobei der besagte ACS zum Abfragen und Speichern der besagten fehlenden Abhängigkeiten angeordnet und angepasst ist.

17. System nach Anspruch 12, wobei der besagte ACS zur Sicherheitsüberprüfung angeordnet und angepasst ist.

18. System nach Anspruch 12, weiterhin umfassend ein Mittel zur Datenspeicherung in Verbindung mit dem besagten ACS, auf dem die besagten Anwendungen und die besagten fehlenden Abhängigkeiten, die dem besagten ersten Kundenendgerät (CPE 1) entstammen, zu speichern und abzufragen sind.

19. System nach Anspruch 12, wobei das besagte erste und das besagte zweite Kundenendgerät und der besagte automatische Konfigurationsserver (ACS) mit der technischen Spezifikation TR-069 kompatibel sind.

20. System nach Anspruch 12, wobei das besagte erste Kundenendgerät (CPE 1) und das besagte zweite Kundenendgerät (CPE 2) eine OSGi-Plattform umfassen.

## Revendications

1. Procédé de partage de données présentes sur un premier équipement des locaux d'abonné, CPE, (CPE 1) avec un deuxième équipement des locaux d'abonné (CPE 2) au moyen d'au moins une signalisation et d'un flux de données, **caractérisé en ce qu'**un serveur d'autoconfiguration, ACS, (ACS), adapté pour configurer automatiquement des équipements des locaux d'abonné, CPE, est inclus dans ledit flux de signalisation.

2. Procédé selon la revendication 1, dans lequel ledit serveur d'autoconfiguration (ACS) est en outre inclus dans ledit flux de données.

3. Procédé selon la revendication 1, dans lequel ledit ACS effectue une vérification de dépendance pour des données sur ledit premier équipement des locaux d'abonné (CPE1).

4. Procédé selon la revendication 3, dans lequel ledit serveur d'autoconfiguration (ACS) transfère les résultats dudit processus de vérification de dépendance audit deuxième équipement des locaux d'abonné (CPE 2).

5. Procédé selon la revendication 3, dans lequel ledit ACS récupère lesdites données et lesdites dépendances manquantes et les stocke dans un moyen de stockage de données à un emplacement qui est accessible lorsque ledit premier CPE est hors ligne.

6. Procédé selon la revendication 1, dans lequel ledit serveur d'autoconfiguration (ACS) effectue une vérification de sécurité.

7. Serveur d'autoconfiguration, ACS, (ACS) pour configurer automatiquement un équipement des locaux d'abonné, CPE, adapté pour être inclus dans un flux de signalisation entre un premier CPE (CPE 1) et un deuxième CPE (CPE 2).

8. Serveur d'autoconfiguration (ACS) selon la revendication 7, adapté en outre pour être inclus dans ledit flux de données.

9. Serveur d'autoconfiguration (ACS) selon la revendication 8, adapté en outre pour effectuer une vérification de dépendance pour des applications présentes sur un desdits CPE.

10. Serveur d'autoconfiguration (ACS) selon la revendication 9, adapté pour transférer les résultats de ladite vérification de dépendance vers le deuxième CPE.

11. Serveur d'autoconfiguration (ACS) selon la revendication 9, adapté en outre pour communiquer avec un moyen de stockage de données sur lequel des données doivent être stockées et récupérées.

12. Système de partage de données comprenant le premier équipement des locaux d'abonné, CPE, (CPE1) et le deuxième CPE, (CPE 2) qui sont adaptés pour communiquer l'un avec l'autre au moyen d'au moins un flux de signalisation et un flux de données, et le serveur d'autoconfiguration, ACS, (ACS) selon la revendication 7.

13. Système selon la revendication 12, dans lequel ledit ACS est en outre inclus dans ledit flux de données.

14. Système selon la revendication 12, dans lequel ledit ACS est conçu et adapté pour une vérification de dépendance pour une application sur ledit premier CPE.

15. Système selon la revendication 14, dans lequel ledit ACS est conçu et adapté pour transférer les résultats dudit processus de vérification de dépendance audit deuxième CPE.

16. Système selon la revendication 12, dans lequel ledit ACS est conçu et adapté pour récupérer et stocker lesdites dépendances manquantes.

17. Système selon la revendication 12, dans lequel ledit ACS est conçu et adapté pour la vérification de sécurité.

18. Système selon la revendication 12, comprenant en outre un moyen pour le stockage de données en communication avec ledit ACS, sur lequel lesdites applications et lesdites dépendances manquantes, provenant dudit premier équipement des locaux d'abonné (CPE 1), doivent être stockées et récupérées.

19. Système selon la revendication 12, dans lequel ledit premier et ledit deuxième équipements des locaux d'abonné et ledit serveur d'autoconfiguration (ACS) sont compatibles avec une spécification technique TR-069.

20. Système selon la revendication 12, dans lequel ledit premier équipement des locaux d'abonné (CPE1) et ledit deuxième équipement des locaux d'abonné (CPE 2) comprennent une plate-forme OSGi.
